# EUROPÄISCHE PATENTSCHRIFT

(11) **EP 0 662 181 B1**
(45) Veröffentlichungstag und Bekanntmachung des Hinweises auf die Patenterteilung: **20.03.1996**
(21) Anmeldenummer: 93914742.7
(22) Anmeldetag: 26.06.1993
(51) Int. Cl.: E04D 13/14, E04D 13/16, F16L 5/02, F24F 7/02

(54) **FLACHDACHDURCHFÜHRUNG**
FLAT ROOF DUCT
CONDUIT POUR TOIT PLAT

(30) Priorität: 18.09.1992 DE 9212579 U
(43) Veröffentlichungstag der Anmeldung: 12.07.1995
(73) Patentinhaber: Klöber, Johannes, D-58256 Ennepetal (DE)
(72) Erfinder: Klöber, Johannes, D-58256 Ennepetal (DE)
(74) Vertreter: Grundmann, Dirk, Dr.
(86) Internationale Anmeldenummer: EP9301662
(87) Internationale Veröffentlichungsnummer: WO9406980

(56) Entgegenhaltungen:
- DE-A- 1 609 923
- DE-A- 3 700 956
- DE-U- 8 704 617
- US-A- 1 512 754
- US-A- 2 969 027

## Beschreibung

Die Erfindung bezieht sich auf eine insbesondere als Lüfter ausgebildete Flachdachdurchführung mit einem rohrförmigen Unterteil, welches im Bereich seines oberen Endes eine Stützplatte aufweist, welcher eine Gegenstützplatte zugeordnet ist, über die ein rohrförmiges Oberteil vorsteht, das sich koaxial erstreckt zu einem teleskopartig im Unterteil verschieblichen Mittelrohr.

Eine als Lüfter ausgebildete Flachdachdurchführung dieser Art ist durch die FR-PS 2 056 438 bekannt. Die in Figur 5 dieses Vorläufers dargestellte Lösung sieht eine Steckverbindung der teleskopartig ineinandergefügten Teile vor, welche Steckverbindung über je einen Kautschukring abgedichtet und reibungsschlüssig gehalten ist. Eine solche Zuordnung erweist sich trotz der Lösbarkeit entsprechender Verbindungen als nachteilig; so kann beispielsweise eine größere Schneedeckenüberlagerung zu einer Verfälschung der Freistandslage des Oberteils führen; es wird weiter in Teleskoprichtung eingedrückt. Ungünstigstenfalls können dabei die Lüftungsgitter eines solchen Oberteils durch Überlappung mit dem Mittelrohr abgedeckt werden. Die Entlüftungswirkung erfährt dadurch bei geschlossenen Überdachungen eine gravierende Beeinträchtigung. Andererseits sind aber auch beispielsweise wärmebedingt Verwerfungen der die Rohdecke überfangenden Dachhaut oder Dämmschicht durchaus in der Lage, die Gegenstützplatte anzuheben. Außerdem können die Kautschukringe leicht verrotten. All diese in der Regel unbemerkten Veränderungen beeinträchtigen den erstrebten dichtenden Abschluß solcher Flachdachdurchführungen.

Durch das DE-GM 87 04 617 des Anmelders existiert darüber hinaus der Vorschlag, an einer Flachdachdurchführung das Oberteil schraubtechnisch mit dem anschließenden Rohrteil zu verbinden. Die Schraubverbindungsstelle liegt oberhalb der Dachhaut.

Aufgabe der vorliegenden Erfindung ist es, unter Vermeidung der erläuterten Nachteile eine gebrauchsstabile Verbindung gattungsgemäß mehrteiliger Flachdachdurchführungen zu schaffen.

Gelöst ist diese Aufgabe durch die im Anspruch 1 angegebene Erfindung.

Die Unteransprüche sind vorteilhafte Weiterbildungen der gattungsgemäßen Flachdachdurchführung.

Zufolge solcher Ausgestaltung ist eine gattungsgemäße Flachdachdurchführung in Form eines Lüfters erzielt: Die Schraubverbindung führt zu einem definierten, belastungsfähigen Verbund des Lüfters in sich und dachseitig. Außerdem ist die Schraubverbindung verdeckt. So entsteht kein Anreiz zu einem Mißbrauch. Konkret ist so vorgegangen, daß das Oberteil unterhalb der von ihm getragenen Gegenstützplatte ein Schraubgewinde trägt zur Verbindung mit dem Mittelrohr. Das hat außerdem den Vorteil, daß das in aller Regel zwischen der Oberseite der Stützplatte und der Unterseite der Gegenstützplatte liegende Dämmschichtmaterial spannbackenartig rotationssymmetrisch einfaßbar ist. Ein etwa hochklappender Lochrand wird sauber niedergehalten und sogar leicht komprimiert. Diese Zustellung ergibt sich sogar als Feinverstellung, während die Grobverstellung nach wie vor über den Teleskopverbund erreicht wird, wonach das Mittelrohr einfach im Inneren des Unterteils verklebt wird. Es lassen sich Dicken von bis zu 50 cm überbrücken. Weiter bringt die Erfindung in Vorschlag, daß das Mittelrohr am oberseitigen Ende eine Innengewinde-Muffe ausbildet von größerem Querschnitt als das Mittelrohr. Hierdurch wird eine Stufung des lichten Querschnitts des Lüfters in diesem Bereich vermieden. Es liegen also sowohl in Bezug auf das Mittelrohr als auch in Bezug auf das Oberteil gleiche Strömungs-Bedingungen vor. Will man dabei mit gleichbleibenden Wandungsdicken arbeiten, so erreicht man die Muffenbildung einfach durch einen stufenförmigen Übergang zwischen Innengewinde-Muffe und Mittelrohr. Die radiale Ausladung findet dabei nicht im Bereich der Vertikalbohrung der Rohdecke statt, sondern im Bereich der Dämmschicht, die aufgrund ihrer Elastizität bzw. Flexibilität ohnehin auch radial auswärts gerichtet verdrängungsfähig ist. Es ist sogar der Vorteil gegeben, daß im Bereich der Muffe durch höhere Komprimierung der Dämmschicht eine festere Anlage dort vorliegt, es also auch schon bei der Montage nicht zu einem Abrutschen kommt. Endlich bringt die Erfindung noch den Vorschlag, daß der obere Rand der Innengewinde-Muffe bis zur Unterseite der Gegenplatte reicht. Unter Durchlaufen der nutzbaren axialen Länge der "Spannbackenverstellung" zwischen den beiden Platten sprich Stützplatte und Gegenstützplatte, fährt der Rand dichtend gegen die Unterseite. Er kann als Ringlippe gestaltet sein, so daß sich der Dichtungseffekt erhöht. Da der zugehörige Außengewinde-Stutzen des Oberteils in solcher Nachbarschaftslage zur Gegenstützplatte liegt, fällt die Schraubverbindungsstelle sehr stabil aus. Der Rand umgibt den dortigen Rohrabschnitt praktisch reifartig mit sogar großer Auslegerlänge und somit hoher innerer Stabilität.

Der Gegenstand der Erfindung ist nachstehend anhand eines zeichnerisch veranschaulichten Ausführungsbeispieles näher erläutert. Es zeigt:
- Fig. 1: die als Lüfter realisierte Flachdachdurchführung in Seitenansicht, und zwar in Explosionsdarstellung,
- Fig. 2: den Lüfter teileverbunden und montiert,
- Fig. 3: eine partielle Draufsicht auf Figur 2 und
- Fig. 4: einen Vertikalschnitt im Verbindungsbereich aller drei Teile, und zwar in etwa natürlichem Maßstab.

Die als Lüfter L gestaltet Flachdachdurchführung besteht aus drei koaxial addierten Teilen, nämlich einem Oberteil 1, einem Unterteil 2 und einem Zwischenteil, bezeichnet als Mittelrohr 3. Auch die Teile 1 und 2 sind rohrförmig.

Bei allen drei Teilen handelt es sich um Kunststoff-Spritzteile. Herstellungsmaterial ist Hart-PVC.

Das rohrförmige Unterteil 2 sitzt in einer Vertikalbohrung 4 einer horizontal verlaufenden sogenannten Rohdekke 5. Gebildet ist diese beispielsweise aus armiertem Beton. Eine im Bereich des oberen Endes 2' des besagten Unterteils 2 ausgebildete Stützplatte 6 ruht auf der Oberseite der Rohdecke 5. Sie ist dort in üblicher Weise befestigt. Der Außendurchmesser der kreisrunden, gleich angeformten Stützplatte 6 entspricht etwa dem dreifachen Außendurchmesser des zylindrischen rohrförmigen Unterteils 2. Letzteres liegt im Zentrum der horizontal verlaufenden Stützplatte 6.

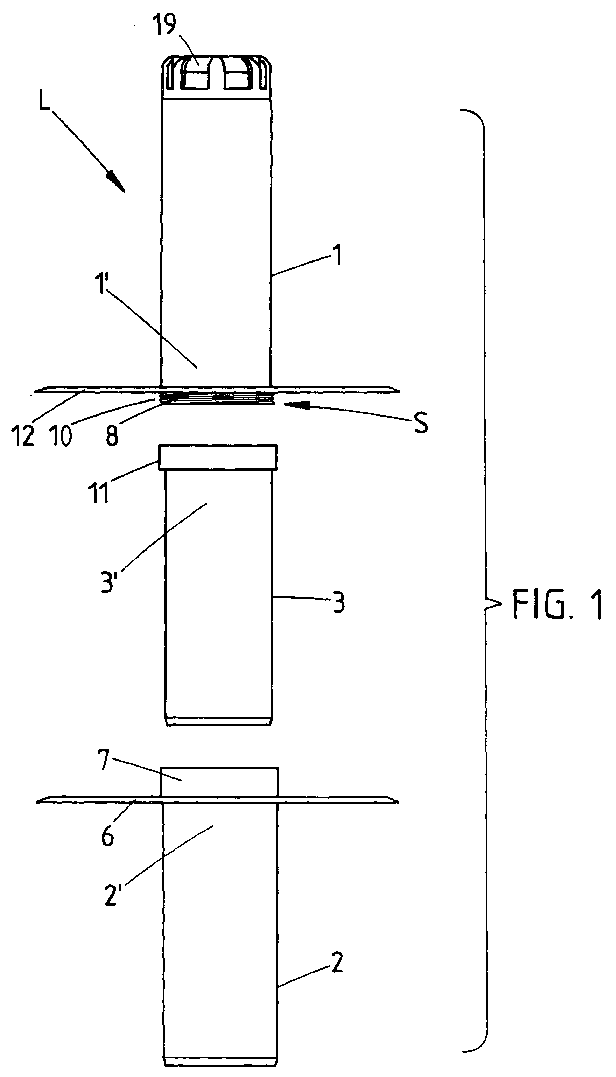

Wie Figur 1 entnehmbar, setzt sich das Unterteil 2 über die Oberseite der Stützplatte 6 hinaus fort. Dieser axial relativ kurze Abschnitt ist als Stutzen 7 bezeichnet. Stutzen 7 und Unterteil 2 besitzen gleichen lichten Querschnitt.

Das zylindrische Innere des Unterteils 2 nimmt das Mittelrohr 3 auf. Letzteres läßt sich im Unterteil 2 teleskopartig verschieben und festlegen. Das Mittelrohr 3 ist von etwa gleicher axialer Länge wie das Unterteil 2.

Das Mittelrohr 3 dagegen läßt ich an das rohrförmige Oberteil 1 andocken. Hierzu dient eine Schraubverbindung S. Realisiert ist letztere zwischen dem oberen Ende 3' des Mittelrohres 3 und dem unteren Ende 1' des rohrförmigen Oberteils 1.

Konkret ist dabei so vorgegangen, daß das rohrförmige Oberteil 1 an seinem unteren Ende 1' ein Schraubgewinde 8 trägt zum Eingriff in ein Innengewinde 9 des Mittelrohres 3.

Das Schraubgewinde 8 ist einem axial relativ kurz bemessenen Stutzen 10 angeformt. Das korrespondierende Innengewinde 9 liegt in einer ebenfalls relativ kurz bemessenen Muffe 11 des Mittelrohres 3.

Der das Schraubgewinde 8 als Außengewinde tragende Stutzen 10 wird oberseitig begrenzt durch eine horizontal ausgerichtete Gegenstützplatte 12, welche von der Mantelwand des rohrförmigen Oberteils 1 ausgeht und einen Außendurchmesser besitzt, der dem der darunter liegenden Stützplatte 6 des Unterteils 2 entspricht. Auch die Kreisform stimmt überein. Überdies ist die Gegenstützplatte 12 einstückig mit dem Oberteil 1 verbunden, also angeformt.

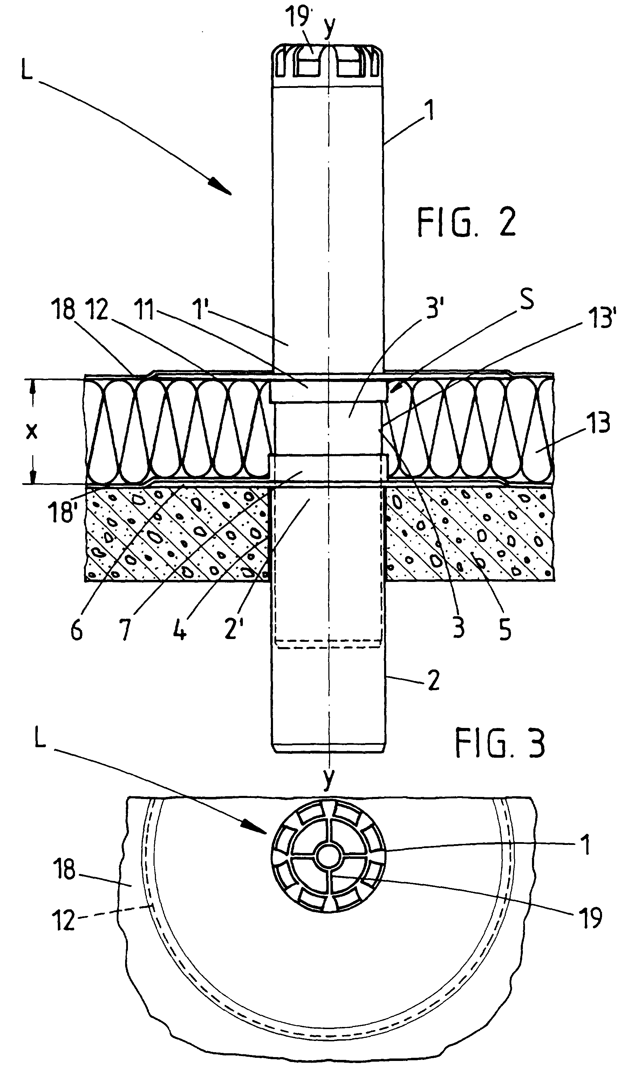

Wie Figur 2 entnehmbar, überfängt die Gegenstützplatte 12 die Oberseite einer Dämmschicht 13. Letztere überlagert mittel- oder unmittelbar die Rohdecke 5.

In Anpassung an die vertikal gemessene Dicke x wird das Mittelrohr 3 mehr oder weniger weit von oben her in das rohrförmige Unterteil 2 eingeschoben. Mit Erreichen einer satten Auflage der Gegentützplatte 12 auf der Dämmschicht 13 wird das Mittelrohr 3 so lange festgehalten, bis ein in die Ringfuge zwischen Mittelrohr 3 und Unterteil 2 eingebrachter Kleber ausgehärtet ist, welcher die oben erwähnte Festlegung des Mittelrohres 3 in seine Führung bringt.

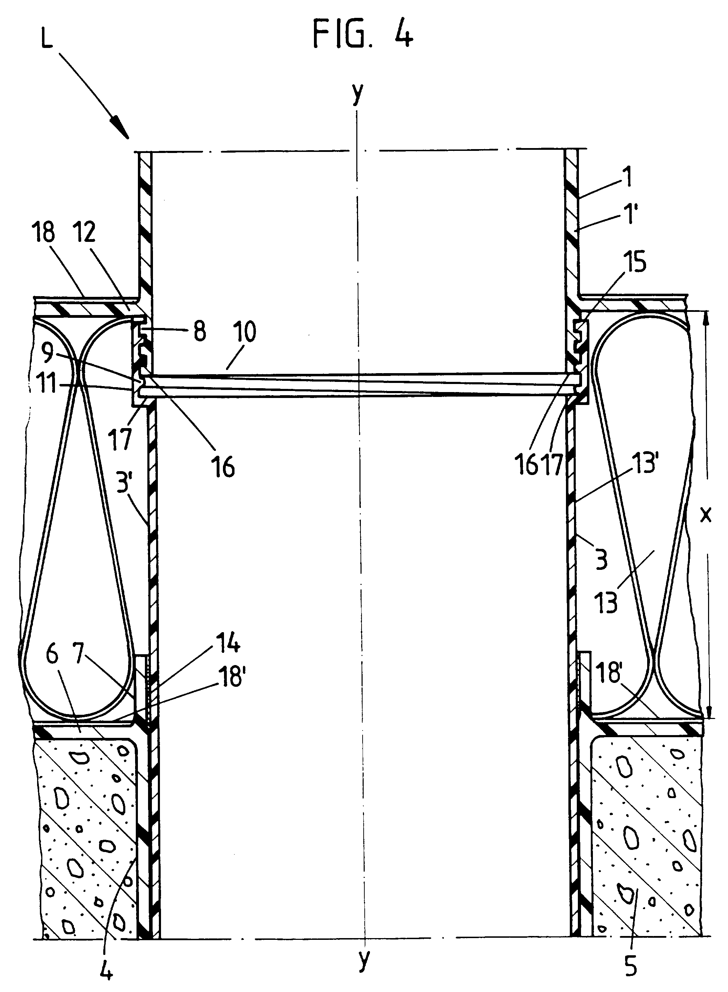

Die auf einer ganzen Querschnittsebene fugenfüllende Klebeschicht ist in Figur 4 dargestellt und mit 14 deklariert. Im allgemeinen genügt es, wenn die Klebeschicht 14 auf den Bereich des die Stützplatte 6 überragenden Stutzens 7 beschränkt ist. Der Stutzen 7 kann eine etwas größere lichte Weite bilden, so daß der aus Figur 4 optisch eindeutig entnehmbare Ringspalte vorliegt.

Im Anschluß an die so erfolgte Festlegung des Mittelrohres 3 kann nun das Oberteil 1 wieder abgeschraubt werden, um die Klebeschicht 14 im Hinblick auf die erstrebte Dichtigkeit zu kontrollieren oder auch aus anderen Gründen.

Durch Aufschrauben des rohrförmigen Oberteils 1 erfolgt sodann die abschließende Zuordnung des Oberteils 1. Legt man dabei eine etwas tiefere Einschublänge zugrunde als die vertikale Dicke x der Dämmschicht 13, kann man sogar eine klemmbackenartige Einspannung des Lüfterdurchtrittsbereichs in der Dämmschicht 13 erzeugen. Diese ist in Figur 4 veranschaulicht. Dort liegt noch kein vollständig anschlagbegrenzter Gewindeeingriff zwischen dem Schraubgewinde 8 und dem Innegewinde 9 vor. Ein weiteres Einschrauben des Stutzens 10 in die Muffe 11 erhöht folglich den Spannbackendruck an der Dämmschicht 3 zwischen der Oberseite der Stützplatte 6 und der Unterseite der Gegenstützplatte 12.

Zudem ergibt sich auch eine gewisse Einspannung in radialer Richtung, und zwar aufgrund der Tatsache, daß das Mittelrohr 3 am oberen Ende 3' mit seiner querschnittsgrößeren Muffe 11 in die Durchtrittsöffnung 13' des Dämmateriales eingedrückt ist. Der entsprechend periphere Überstand der Mantelwand der Innengewinde-Muffe 11 ergibt sich durch einen stufenförmigen Übergang zwischen der Innengewinde- Muffe 11 und der dergegenüber zurückspringenden Mantelwand des Mittelrohres 3. Der Wandungsversatz entspricht im wesentlichen der Wandungsdicke des Mittelrohres 3.

Axial definitiv begrenzt ist die Schraubverbindung jedoch dadurch, daß der obere Rand 15 der Innengewinde-Muffe 11 bis zur Unterseite der Gegenstützplatte 12 reicht. Der Rand 15 kann in dieser Richtung auslippen, wodurch eine besonders dichte Anlage gegeben wäre.

Die dichtende Anlage des in jedem Fall horizontal ebenflächig abschließenden Randes 15 tritt vorrangig auf gegenüber einem Aufsetzen des in Gegenrichtung weisenden Stirnrandes 16 des das Schraubgewinde 8 tragenden Stutzens 10 auf eine korrespondierende Ringschulter 17, entstanden aufgrund des oben erläuterten Wandungsversatzes.

Die Oberseite der Dämmschicht 13 ist von einer Dacheindeckungsfolie 18 überfangen und im Durchtrittsbereich des Lüfters L oberhalb der Gegenstützplatte 12 befestigt, beispielsweise verklebt. Eine Zwischendachhaut 18' kann sodann die Rohdecke 5 überlagern, auch hier unter Übergriff der Oberseite der Stützplatte 6. Auch der Bereich wird verklebt.

Im Falle einer Umrüstung des Oberteils 1 braucht nun nicht mehr die Verbindungsstelle, sprich Klebeschicht 14 zerstört zu werden; vielmehr läßt sich das austauschbedürftige, beispielsweise beschädigte Oberteil 1 leicht einfach durch Abschrauben.vom oberen Ende 3' des Mittelrohres 3 lösen und gegen ein anderes bzw. intaktes Oberteil 1 bestücken (natürlich nach vorherigem Ablösen der Dachhaut 18 im Durchtrittsbereich des Lüfters L).

Das obere Ende des Oberteils 1 ist gitterartig geschlossen. Die zentral orientierte, speicherartige Gitterung 19 geht besonders deutlich aus Figur 3 hervor. Hier kann der Montierende hineinlangen und so relativ hohe Schraubkräfte aufbringen. Die generelle Schraubbarkeit des Mittelrohres 3 eröffnet die Überbrückung von Dämmschichten bis zu einer Dicke von 50 cm, und das sogar bei einer noch gut tragenden Überlappungslänge zum unteren Rohrteil.

Die gemeinsame Längsmittelachse der axial addierten, rotationssymmetrischen Teile 1 bis 3 trägt das Bezugszeichen y-y.

Statt eines Lüfters kann es sich auch um eine andere Flachdachdurchführung handeln, wie beispielsweise eine Antennendurchführung.

## Patentansprüche

1. Insbesondere als Lüfter (L) ausgebildete Flachdachdurchführung mit einem rohrförmigen Unterteil (2), welches im Bereich seines oberen Endes (2') eine Stützplatte (6) aufweist, welcher eine Gegenstützplatte (12) zugeordnet ist, über die ein rohrförmiges Oberteil (1) vorsteht, das sich koaxial erstreckt zu einem teleskopartig im Unterteil (2) verschieblichen Mittelrohr (3), dadurch gekennzeichnet, daß das rohrförmige Oberteil (1) unterhalb der von ihm getragenen Gegenstützplatte (12) ein Schraubgewinde (8) trägt zur Verbindung mit dem Mittelrohr (3).

2. Flachdachdurchführung nach Anspruch 1, dadurch gekennzeichnet, daß das Mittelrohr (3) am oberseitigen Ende (3') eine Innengewinde-Muffe (11) ausbildet von größerem Querschnitt als das Mittelrohr (3).

3. Flachdachdurchführung nach Anspruch 2, gekennzeichnet durch einen stufenförmigen Übergang zwischen Innengewinde-Muffe (11) und Mittelrohr (3).

4. Flachdachdurchführung nach einem der Ansprüche 2 und 3, dadurch gekennzeichnet, daß der obere Rand (15) der Innengewinde-Muffe (11) bis zur Unterseite der Gegenstützplatte (12) reicht.

## Claims

1. Flat roof duct constructed in particular as a fan (L) with a tubular lower portion (2) which in the region of its upper end (2') comprises a support plate (6) with which is associated a countersupport plate (12) beyond which projects a tubular upper portion (1) which extends coaxially with a centre tube (3) which is slidable telescopically in the lower portion (2), characterised in that the tubular upper portion (1) below the countersupport plate (12) carried by it carries a screw thread (8) for connection to the centre tube (3).

2. Flat roof duct according to claim 1, characterised in that the centre tube (3) at the upper end (3') forms an internally threaded sleeve (11) of larger cross-section than the centre tube (3).

3. Flat roof duct according to claim 2, characterised by a step-like junction between internally threaded sleeve (11) and centre tube (3).

4. Flat roof duct according to either of claims 2 and 3, characterised in that the upper edge (15) of the internally threaded sleeve (11) extends as far as the lower side of the countersupport plate (12).

## Revendications

1. Conduit pour toit plat réalisé notamment comme aérateur (L), comprenant une partie inférieure tubulaire (2) qui présente à son extrémité supérieure (2') une plaque d'appui (6) qui est associée à une plaque de contre-appui (12), au-dessus de laquelle s'élève une partie supérieure tubulaire (1), qui s'étend coaxialement par rapport à un tube médian (3) coulissant de façon télescopique dans la partie inférieure (2), caractérisé en ce que la partie supérieure (1) comporte, au-dessous de la plaque de contre-appui (12) portée par cette partie supérieure, un filet de vis (8) pour la liaison avec le tube médian (3).

2. Conduit pour toit plat selon la revendication 1, caractérisé en ce que le tube médian (3) forme à son extrémité supérieure (3') un manchon taraudé (11), dont la section transversale est supérieure à celle du tube médian (3).

3. Conduit pour toit plat selon la revendication 2, caractérisé par une transition à gradin(s) entre le manchon taraudé (11) et le tube médian (3).

4. Conduit pour toit plat selon l'une des revendications 2 et 3, caractérisé en ce que le bord supérieur (15) du manchon taraudé (11) s'étend jusqu'à la face inférieure de la plaque de contre-appui (12).
